# EUROPEAN PATENT SPECIFICATION

(11) **EP 4 531 549 B1**
(45) Date of publication and mention of the grant of the patent: **29.04.2026**
(21) Application number: 23729856.7
(22) Date of filing: 19.05.2023
(51) Int. Cl.: A01J 25/00, A01J 27/04

(54) **APPARATUS FOR PROCESSING SEMI-FINISHED DAIRY PRODUCTS**
VORRICHTUNG ZUR VERARBEITUNG VON HALBFERTIGEN MILCHPRODUKTEN
APPAREIL DE TRAITEMENT DE PRODUITS LAITIERS SEMI-FINIS

(30) Priority: 26.05.2022 IT 202200011102
(43) Date of publication of application: 09.04.2025
(73) Proprietor: Marotta Evolution S.r.l., 41015 Nonantola (MO) (IT)
(72) Inventor: MAROTTA, Carmine, 41017 Ravarino (MO) (IT)
(74) Representative: Luppi, Emanuele
(86) International application number: PCT/IB2023/055182
(87) International publication number: WO 2023/228031

(56) References cited:
- IT-A1- BA20 140 018
- US-A- 5 723 158
- US-A1- 2022 152 622

## Description

### TECHNICAL FIELD OF THE INVENTION

The present invention relates to an apparatus for processing semi-finished dairy products, particularly for processing frayed and/or shredded mozzarella into shreds constituting one of the filling components of finished dairy products such as burrata.

Burrata is in fact a fresh stringy cheese, usually shaped like a pouch, containing a filling consisting of frays or shreds of fresh mozzarella cheese mixed with cream; this filling is also called stracciatella.

Thus, the present invention relates to an apparatus for producing one of the components of stracciatella.

### STATE OF THE ART

It is currently known to obtain mozzarella shreds from larger pieces of mozzarella, which are manually frayed/shredded to obtain frayed pieces, that is, small pieces that have not been cut (by blades, knives, or other tools) but have been torn.

As an alternative to performing manual operations, it is also known to obtain mozzarella shreds by means of automatic machines or apparatus consisting of two horizontal, side-by-side, counter-rotating cylindrical rollers. Each roller, made of plastic and keyed to a corresponding rotating shaft, is shaped to define a succession of discs that cooperate with the discs of the adjacent roller to fray the mozzarella. The perimeter of the discs is mostly circular but has a series of recesses/indentations. The recesses/indentations of each disc are aligned with the recesses/indentations of the other discs to define longitudinal grooves that extend parallel to the axis of rotation of each roller. The mozzarella pieces to be frayed are dropped from above and, as they pass between one roller and the next, eventually tear off to obtain the shreds in the shapes and sizes needed to make stracciatella. The resulting shreds are then dropped and can be collected by placing a tub, tray or other similar container open to the top, under the rollers themselves.

However, it has been noted that known machines or apparatuses of the type mentioned above do not allow for adequate performance because the mozzarella shreds are not always ripped and/or made to the highest standard; sometimes the mozzarella shreds get wrapped around the rollers and/or get stuck in the space (gap) between discs, necessitating frequent stops of the apparatus or machine to clear the obstructed rollers of the stuck shreds, resulting in limited productivity due to continuous stops.

In addition, the cleaning of this type of machine is complex and delicate, particularly for the plastic rollers that are keyed onto their rotating shafts and in whose joining areas undesirable bacterial charges could remain in the production of food products.

**Additionally,** known apparatuses or machines have hoppers for feeding mozzarella to be frayed attached to a sliding plate above the rollers; the plate and its hoppers must be removed from the machine by sliding the metal plate horizontally in a very inconvenient, slow and impractical manner for both cleaning and maintenance operations. These problems also consequently aggravate downtime operations for cleaning the rollers. A special type of apparatus for pressing dairy products is disclosed in patent document ITBA20140018A1.

### SCOPE OF THE INVENTION

The main scope of the present invention is to solve all disadvantages and operational problems presented by currently known apparatuses or machines.

Another scope of the present invention is to realize a versatile piece of apparatus that avoids undue downtime and long cleaning times of the rollers and feeding parts of the apparatus, ensuring hygiene and bacterial load abatement required in the production of food products in the dairy industry.

Still another scope is to make an integrated compartment with the mozzarella shredding apparatus, again to ensure the hygiene required for food production in the dairy industry.

Further scope of the present invention is to obtain consistently and repeatably shredded and/or frayed mozzarella shreds in appropriate sizes.

Still another scope of the present invention is to enable easy adjustment of the size of mozzarella shreds by acting on the adjustment of the positioning of the rollers.

Another scope of the present invention is to provide for the possibility of independently varying and adjusting the angular rotation speed of the rollers used to tear and fray mozzarella into shreds.

### SUMMARY AND ASPECTS OF THE INVENTION

One or more of the above-mentioned scope are achieved by means of specific aspects apparent from the preferred, but not limiting, embodiments of the present invention. Said scopes are in accordance with one or more of the appended claims, intelligible by means of the attached drawings and the following detailed description.

Thus, a first aspect of the present invention concerns an apparatus for processing semi-finished dairy products consisting of a support frame suitable for carrying an electrical power supply and control unit and a machine body housed in a protective casing; the machine body is in operational connection with an electrical power supply and control unit, while the protective casing has movable and/or removable wall portions; in particular, the machine body includes:
∘ At least one pair of counter-rotating cylindrical rollers, adjacent to each other, and pivotally housed within the machine body by means of opposing shoulders,
∘ counter-rotating rollers of the at least one pair have on the mantle surface an alternating succession of shaped discs and recesses, spaced apart and parallel to the axis of rotation of the rollers,
∘ In addition, counter-rotating cylindrical rollers are rotatably mounted between the opposing shoulders,
∘ at least one pair of independent motors, each motorization being located at a respective of said opposing shoulders and being operationally connected on one side with said power supply and control unit and on the other side with a respective of said cylindrical rollers by means of mechanical connection suitable for supplying the torque necessary to activate its rotation, and
∘ at least one hopper-type dairy product feeding system placed on one of said movable and/or removable wall portions positioned at the top of said protective casing,

Within this aspect, the shaped discs, of the aforementioned pair of cylindrical rollers, are characterized by each having at least one protruding tooth and at least one respective recess along the circumference of each disc.

According to another aspect of the present invention, in accordance with the previous one, the apparatus has at least one protruding tooth and at least one respective recess, arranged along the circumference of each disc, but in particular it has a plurality of teeth and respective recess arranged spaced out along the circumference of each disc.

Still another aspect of the present invention, in accordance with the preceding ones, provides that the teeth and recesses, arranged spaced at intervals along the circumference of each disc, are teeth and recesses angularly offset from the position of teeth and recesses of a disc preceding and/or following in relation to the axis of rotation of each counter-rotating roller; specifically, teeth and recesses are angularly offset from the position of a disc preceding and/or following by an angular amount between 5 and 45 degrees, but preferably arranged offset by 30 degrees.

Still one aspect of the present invention, in accordance with one more of the preceding aspects, provides that teeth and recesses of the apparatus according to the invention, which are spaced along the circumference of each disc, are made by removal of material from a monolithic metal body of substantially cylindrical shape.

According to a further aspect of the present invention, in accordance with the previous aspects, it is provided that the cylindrical rollers, mounted on board the apparatus, are rollers made by removal of material from a cylindrical metal body (generally and preferably of stainless steel). In accordance with this aspect, the rollers may be identical, or have different dimensional and attachment characteristics to the apparatus. In particular, the cylindrical rollers may be mounted either on a sliding slide equipped with a cam drive system activated by a maneuvering shaft protruding outside the protective casing of the machine body, or on fixed and/or rolling supports capable of permitting adjustment of the position of said at least one cylindrical roller both approaching and/or spacing away from the other roller of the pair, as well as with respect to its longitudinal axis of rotation, in order to be able to vary and optimize the reciprocal position of the cylindrical rollers of the pair essentially according to two orthogonal directions.

In accordance with the preceding aspects, another aspect of the invention provides that the apparatus has at least one pair of independent motors, controlled with a power supply and control unit, capable of imparting counter-rotating motion to the rollers, mechanically connected to it; in particular, the motors being independent, the angular speeds are imparted independently, in particular and preferably the independent angular speeds of the rollers are different from each other, being able, however, to be adjusted and varied according to specific operational needs.

In still another aspect of the present invention, in accordance with one more of the preceding aspects, it is provided in the apparatus that at least one cylindrical roller of a pair of rollers and the independent motorization associated therewith are mounted on a sliding slide having a cam-driven system activated by a drive shaft protruding outside the protective casing of the machine body; the sliding slide and the drive system provide for varying in approach and/or spacing apart the mutual distance of the cylindrical rollers of said pair of rollers for optimizing the processing of the dairy product; in other words, in practice, the axis of rotation of a first roller is fixed while the axis of rotation of the second roller is approached and moved away from the first roller. The second cylindrical roller and its electric motor are mounted on a sliding slide connected, via the cam system and its maneuvering shaft, to an actuating knob, the rotation of the knob provides for the rotation of the cam system by obtaining the displacement of the cylindrical roller concerned in approaching/moving away from its adjacent one. Still in accordance with the present aspect, the maneuvering shaft together with the operating knob can be connected to an electric drive that can be operated and controlled by means of a programmable logic processor (PLC).

The dairy product is fed through a system of hoppers, specifically a pair of them, attached and integral to a movable upper portion of wall or plate of the protective casing, the wall or plate being movable, with a tilting motion, relative to the casing by horizontal hinge constraint.

Still a further aspect of the present invention, in accordance with one more of the preceding aspects, provides that in the apparatus the machine body, below to the at least one pair of cylindrical counter-rotating rollers is provided with a closed and removable collection compartment for collecting the semi-finished dairy product passing through said rollers and being frayed and/or torn; in particular, the collection compartment is shaped as a closed drawer, sliding by means of its side guides to completely close the space underneath the counter-rotating rollers, or to be pulled out completely to provide for transport to another processing stage of the dairy product processed by the apparatus according to this invention.

Other aspects of the present invention, in accordance with the preceding aspects, provide that the aforesaid cylindrical rollers are provided, at one end portion thereof, with a joint socket apt to be keyed to the mechanical transmission of the respective independent motorization; that is, a male/female joint may be provided between a cylindrical roller and its quick-mounting and quick-release motorization. In accordance with this aspect, since the independent motors are arranged near opposite shoulders of the apparatus, each cylinder will be mounted on the apparatus in the opposite position from the adjacent cylindrical roller.

Also in accordance with the foregoing aspects, in the apparatus according to the invention, the support frame is equipped with adjustable ground support feet and/or safety wheels, or both in order to be able to secure the apparatus to the support floor, or move it.

Further aspect of the apparatus according to the invention, in accordance with one or more of the previous aspects, provides that the power supply and control unit is equipped with a programmable logic controller (PLC) operatively connected to command, adjust, and/or vary each angular speed of each cylindrical roller, thus also being able to reverse the direction of rotation of them; the programmable logic controller (PLC) is thus capable of imparting different angular speeds to each cylindrical roller as well.

Still another aspect of the present invention, in accordance with one more of the previous aspects shows that the angularly staggered arrangement of teeth and recesses of each disc of each cylindrical roller arranges them according to a helix profile.

Advantageously, the shape of the teeth and recesses of the counter-rotating cylindrical rollers, transiting in rotation within the adjacent roller grooves, allows at the same time to fray and tear the paste of the dairy product being processed, particularly mozzarella cheese, and at the same time to achieve a cleaning of any residual dairy product in the groove in which they transit in rotation.

Another advantage of the present invention is that the adjustment in approaching and/or spacing apart of the cylindrical rollers of a pair can allow the processing of dairy products, especially mozzarella, having different consistency and/or paste.

Also according to the present invention, it is possible to provide for the making of various types of teeth with inclinations and/or shapes appropriately suited to the type of dairy product to be processed.

The use of stainless steel and the manufacture of the cylindrical rollers by simple material removal, starting with a monolithic cylindrical body, eliminates any joining elements on the cylindrical roller in contact with the dairy product, allowing for a perfect sanitation of the same.

Further advantage is to allow the easy transportability of the semi-finished product collected in the close collection drawer, while allowing improved hygiene of the parts of this apparatus in contact with the dairy product.

### BRIEF DESCRIPTION OF THE DRAWINGS

A preferred but not limiting form of embodiment of the present invention is described in the attached drawings in which:
Figure 1 is an overall perspective view of an apparatus according to the invention,

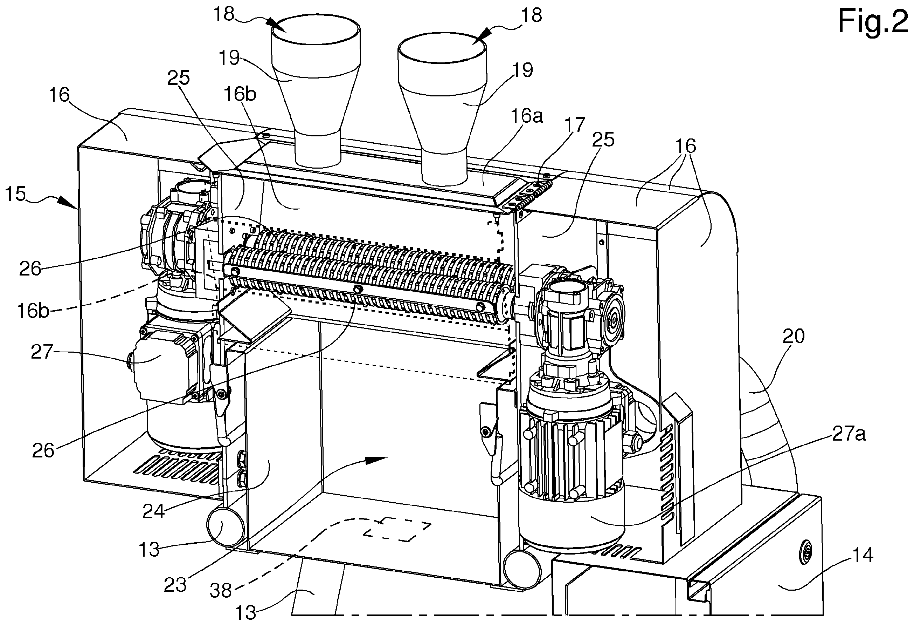

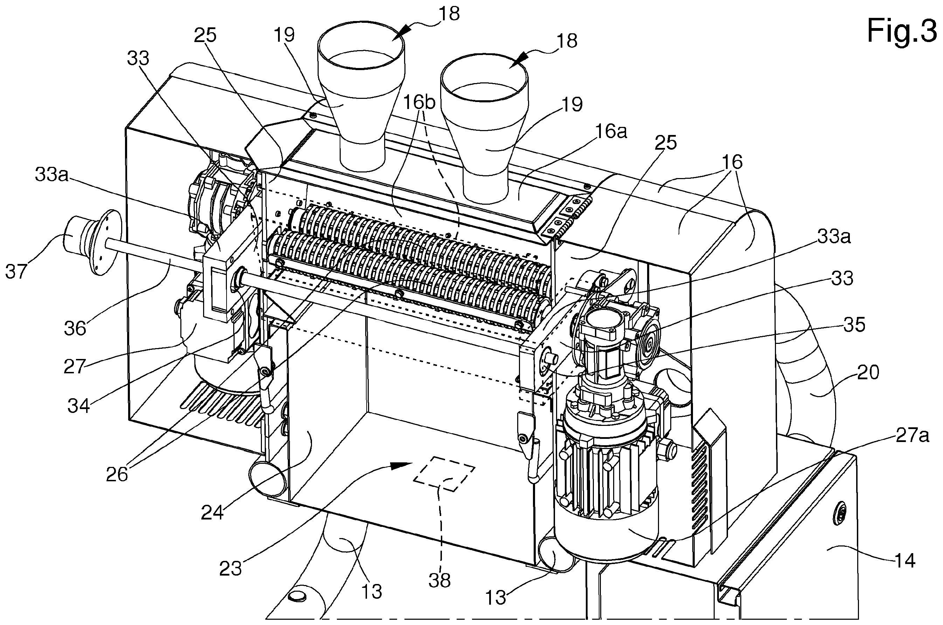

Figures 2 and 3 reproduce, on the opposite side, the same apparatus as in Figure 1, with two perspective views partially sectioned according to two different vertical planes,
Figure 4 is a perspective view of a shaped cylindrical roller from Figs. 2 and 3,
Figure 5 is a section of the cylindrical roller shaped according to the line V-V in Fig. 4,
Figure 6 is a partially sectioned side view of one of the embodiments of the cylindrical roller of the present invention, and
Figure 7 is a perspective view with cylindrical roller attachment elements of Fig. 6 in a different operating position.

### DETAILED DESCRIPTION

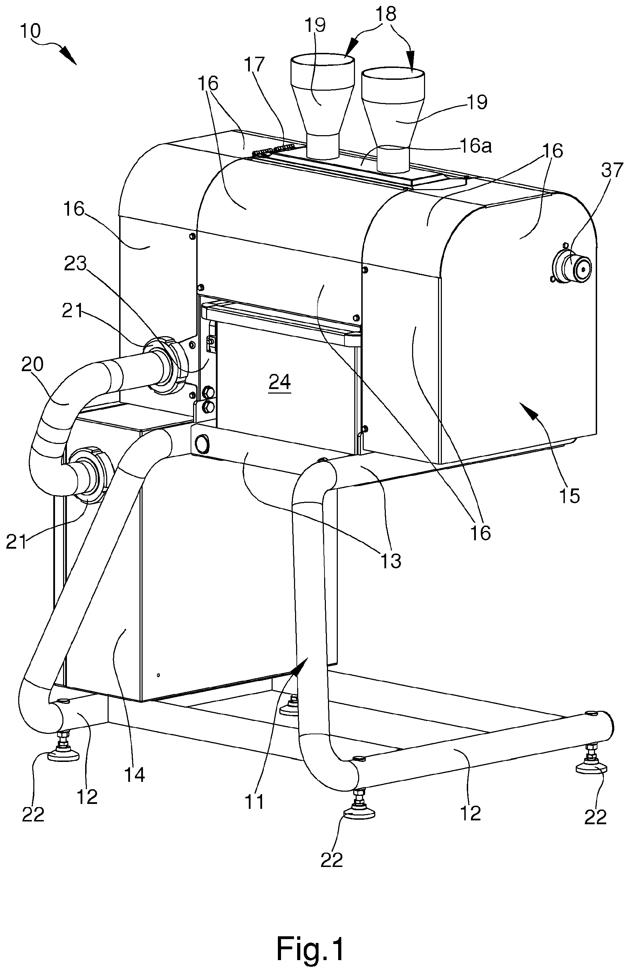

Some preferred embodiments of the present invention are now described only by way of example and they are therefore not intended to limit the invention, where referring to Figure 1, numerical reference 10 indicates overall an apparatus for processing semi-finished dairy products.

As indicated in the section on framing the technical field of this invention, the semi-finished dairy product is preferably mozzarella cheese that is to be frayed and/or broken and/or shredded into shreds to go as one of the filling components of finished dairy products such as burrata.

In fact, burrata contains a filling consisting of shreds and/or shreds of fresh mozzarella cheese mixed with cream; this filling is also called stracciatella.

Nonetheless, the apparatus 10 is also capable of processing other types of dairy products, including spun paste, that must be frayed and/or shredded for processing and/or consumption requirements.

Again with reference to Figure 1, apparatus 10 consists of a support frame 11, consisting of a lower support base 12 and an upper support structure 13; a complex power supply and control unit 14 is housed on the lower support base 12, while a machine body 15 is stably mounted on the upper support structure 13, equipped with a protective casing 16, consisting of both fixed and movable panels and/or walls.

Specifically, a movable wall 16a is provided in the area of the upper floor of the casing 16, which can be intuitively tilted from the upper floor of the casing 16 by means of the hinge 17; on the movable wall 16a a feeding device 18 of the dairy product to the apparatus is stably attached; in the preferred embodiment described in the figures, the feeding device 18 consists of a pair of hoppers 19 tapered downward and arranged spaced apart on the movable wall 16a. Hoppers 19 are mounted on the movable wall 16a, where both hoppers 19 and the movable wall 16a are intuitively in passage communication with the interior of the machine body 15 at and above the movable processing elements contained within the protective casing 16. Hoppers 19 can be mounted on the movable wall 16a either by welding or, alternatively, by suitable attachments (not shown) that make them easily disassembled from the wall 16a. Advantageously, hoppers 19 mounted by means of attachments, which make them removable, allow for accurate and easier cleaning of the dairy feeding area; it also follows that removable hoppers 19 also allow them to be replaced with others of different shapes and sizes to customize the machine to the user's needs.

Hoppers 19 advantageously feature a profile tapered downward, and thus toward the movable wall attachment 16a, to prevent an operator intent on feeding dairy product from, even accidentally, reaching into the area of the machine body 15 with the moving processing elements or moving parts of the apparatus (which will be described in detail later in this description).

The machine body 15 and the electrical power supply and control unit 14 are operationally connected to each other with a connection device 20, carrying both the electrical and control connections of the motorizations; at the ends of the connection device 20 are provided respective connectors 21 that end on one side on the machine body 15 and on the other side on the electrical power supply and control unit 14.

The lower base 12 of the support frame 11, in the non-limiting embodiment shown in the figures, is provided with adjustable ground support feet shown in 22. In a different embodiment of the present invention, alternatively and/or in association with the adjustable feet 22, safety wheels (not shown) may also be provided. Such ground support devices (feet and/or wheels) enable the apparatus to be fixed and positioned stably to the supporting floor, but obviously also to be moved easily.

In a central portion of the machine body 15, below the movable elements of the apparatus 10 (which will be better described below), there is a collection compartment shown in 23, while within this compartment 23 is inserted a removable drawer 24, for the collection of the dairy product processed by the movable elements of the apparatus. The drawer 24, advantageously, provides for closing the mouth of the compartment 23, but being completely removable from its seat it can be used to easily, and in a completely safe manner, including from a hygienic point of view, transport the processed dairy product from the mobile elements of the apparatus to other area and/or processing stage within a dairy plant. In addition, a load cell 38 or other weighing system is provided on the lower supporting wall of drawer 24 for detecting the weight of drawer 24. The measurement can be used for various additional functions:
- in particular detect the actual presence of drawer 24, such as providing that apparatus 10 is not activated until drawer 24 is placed in the correct position;
- Display the weight of the shreds produced, such as by a visual display (not shown);
- signal when a preset quantity has been reached, such as by means of an audible signal or light beacon. In this way, the apparatus 10 becomes more functional for the user.

Inside the machine body 15, resting on and attached to the upper portion of frame 13, there is a pair of shoulders 25 spaced apart on which, between the dairy product feeding area defined by the hoppers19 and wall 16a and the collection compartment 23 with the drawer 24, two cylindrical rollers 26 are rotatingly housed adjacent to each other.

Cylindrical rollers 26, are operationally and mechanically connected on opposite ends, with two independent motors 27, 27a; these motors 27, 27a are electrically powered and controlled by the power supply and control unit 14 through connections 20, 21 of known type which are therefore not described in detail.

The cylindrical rollers 26 as well as the casing 15 of the apparatus according to the invention are preferably made of stainless steel.

In particular, cylindrical rollers 26 are advantageously made by material removal with a special machine tool, thus avoiding joints and discontinuities between the elements that provide for the processing of the dairy product, consequently facilitating cleaning, sanitization and thus improving the abatement of bacterial charges that remain on them in normal processing cycles.

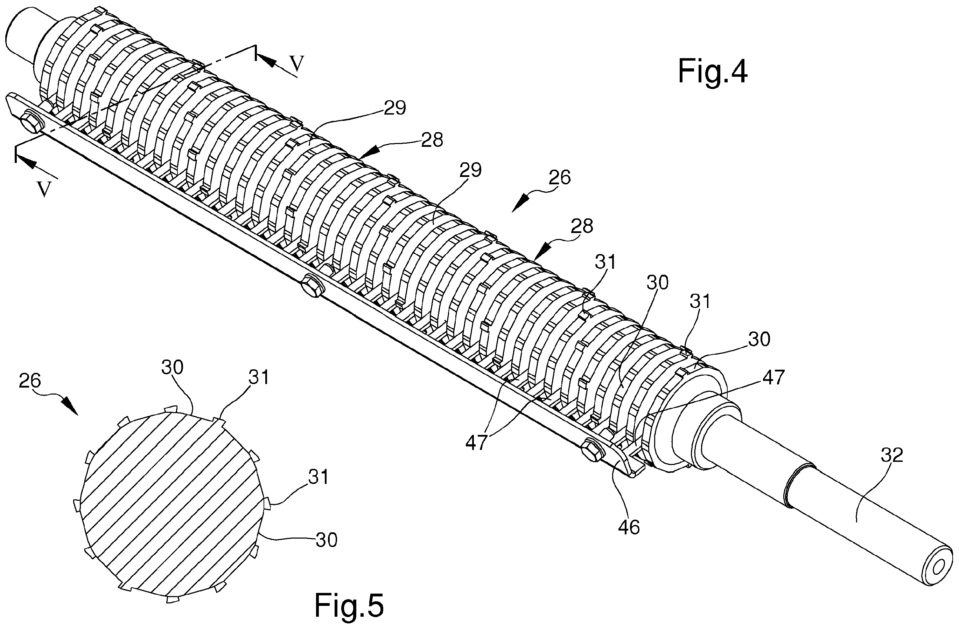

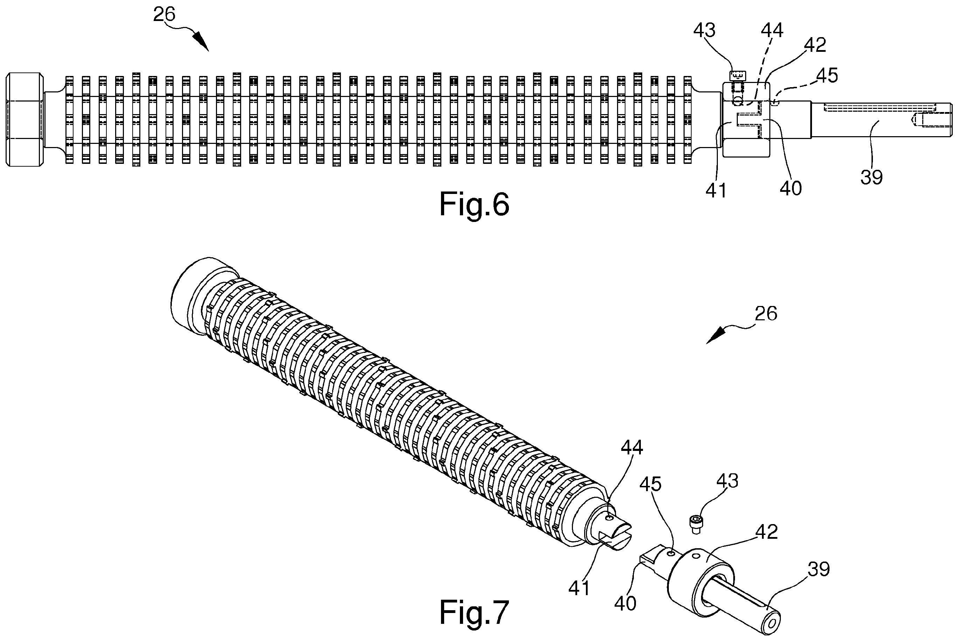

As visible in Figures 5 and 6, a cylindrical roller 26, along its longitudinal axis of rotation, shows an alternating succession of shaped discs 28 and hollows 29, spaced apart and parallel to the axis of rotation of the same roller 26.

Shaped discs 28, in turn, show recesses 30 and teeth 31.

At one end of the cylindrical roller 26 there is also a joint socket 32 with which the roller can be keyed to the motors 27, 27a in a way that is intuitively known and therefore not shown in detail.

Alternatively, in one of the preferred embodiments provided for the present invention, equal and/or dimensionally different cylindrical rollers 26 are provided with a coupling joint capable of engaging with the drive shaft of the motors 27 and 27a according to the diagram shown in Fig. 6. Shown in that figure is the motion transmission shaft 39 equipped with a male portion 40 of the coupling joint that engages with the corresponding female portion 41 of the coupling joint provided for and made on the cylinder 26. For the stable engagement of the coupling elements 40 and 41, a sleeve 42 equipped with a clamping element 43 capable of engaging with a female joint socket 44 made on cylinder 26 when the coupling is in the operational operating configuration, or alternatively with male joint socket 45 of shaft 39 when the coupling is in a configuration suitable for rapid disassembly of cylinder 26.

In other words, sleeve 43 can slide from a closed and clamped position of joint 40-41, as shown in Figure 6, to an open position shown in Figure 7 allowing easy and quick disengagement of the joint portions 40 and 41. In this embodiment, it becomes clear how disassembly of apparatus components 10 in contact with the dairy product is further facilitated to allow for rapid and complete sanitization when required, without having to resort to complex and/or time-consuming disassembly and reassembly of the various components resulting in long downtime.

As mentioned, the machining operations to obtain the shaped discs 28, with their respective recesses 30 and teeth 31, hollows 29, and joint socket 32 are advantageously all realized by material removal from the shroud surface of a metal cylindrical body, preferably made of stainless steel. This avoids the creation of any type of joint between discs 28, hollows 29, recesses 30, teeth 31, and joint socket 32 present on cylindrical rollers 26.

In the preferred form of embodiment shown in Figures 4 and 5, by way of non limiting example, shaped discs 28 are shown with recesses 30 and teeth 31occupying a circumferential sector equal to 30 degrees, there are in fact 12 equispaced teeth arranged along the circumference of each shaped disc 28 of a cylindrical roller 26; in a further manner, the teeth 31 of each shaped disc 28 are also offset from the teeth of a shaped disc 28 that precedes and/or follows along the axis of the cylindrical roller 26 by an angular amount, preferably, equal to 30 degrees, thus arranging the teeth 31 along a helix profile. It should be noted, again within the scope of the present invention, that preferably the angular arrangements of the teeth 31 and the recesses 30 on the circumference of a disc 28 may also vary in an angular range between 5 and 45 degrees; likewise, the staggered positions of the teeth 31, of a disc 28 and between that which precedes and/or follows may be selected in angular distance intervals preferably between 5 and 45 degrees. It will also appear intuitive that any other angular arrangement of the teeth 31 and the recesses 30, as well as any staggered angular positioning on the discs 28 of the aforementioned teeth 31 and recesses 30 may take on values other than those given by way of example, while being fully within the scope of protection defined by the present invention.

The two cylindrical rollers 26 are then mounted on the shoulders 25 in such a way that respective shrinking slots 32 are in opposite positions and in correspondence with the respective independent motors 27, 27a; in addition, the cylindrical rollers 26 are mounted staggered one order apart so that, given their adjacent position, the discs 28 with teeth 31 and recesses 30 of one of the cylindrical rollers 26 (of the described pair) go to engage and/or pass, in their mutual rotation, into the hollows 29 of the other adjacent cylindrical roller 26.

By means of appropriate mounting adjustments, such as by means of suitable shims and/or rolling bearings and/or by adjustment of the moving-slide system 33 described below, the offset position of cylindrical rollers 26 can be conveniently selected between a fully facing position of the discs 28 of a pair of cylinders 26 and a one-order offset position as indicated in the preceding paragraph.

Each of the shoulders 25 is also equipped with elements of a horizontally movable slide shown in 33, each slide 33 is housed in a respective guide 33a attached precisely to the shoulders 25, in addition, the slide 33 is equipped on one side with a slot 34 and on the other with a cam 35. The cam is driven by an operating shaft 36 equipped at one end with an operating knob 37.

A portion of maneuvering shaft 36 protrudes outside casing 16, so that drive knob 37 can be easily gripped and controlled by an operator without having to open, disassemble, or stop the apparatus when in operation to make positioning adjustments to cylindrical roller 26 and its associated motor 27a. Alternatively, the maneuvering shaft 36, together with the operating knob 37, can be connected to a suitable electric motor drive (not shown in detail) which in turn is connected to and controlled by means of a programmable logic processor (PLC).

Basically, slide 33 is apt to accommodate only one of the cylindrical rollers 26 and to support at the same time the respective independent motor 27a so that it, too, can be moved together with roller 26 that is driven into rotation by this motor.

It thus appears clear that the relative position between the two cylindrical rollers 26 mounted on the shoulders 25 can be neared or distanced, this variation being effected by means of the cam/slide system described above, actuated by the corresponding operating shaft. By actuating the knob 37, by means of the shaft 36 a rotary motion is imparted to the cam 35, which in turn, due to the cams own geometry, causes a sliding of the slide 33; this operation, as mentioned, can be carried out manually or by means of a suitable electric motorization controlled by PLC. Conversely, the slide 33 carrying only one of the cylindrical rollers 26 and its motor 27a will move these elements horizontally, thus allowing the movable roller 26 on the slide to be moved closer to and/or farther away from the roller adjacent to it, which is simply pivotally attached to the shoulder 25 and driven by the motor 27.

Each of the independent motors 27 and 27a is mechanically connected, by appropriate mechanical transmission not shown, with the groove 32 of a respective cylindrical roller 26. In addition, each of the independent motors 27, 27a is driven by means of the power supply and control unit 14, this unit in addition to having the usual electrical mains connections (not shown) is equipped with a programmable logic processor (PLC) suitable for controlling, by appropriate software programming, the independent motors 27, 27a.Precisely by virtue of the programmability of the PLC, in order to achieve the purposes of the invention, the cylindrical rollers 26 are controlled to be placed in counter-rotating motion; again by virtue of the programmability of the PLC, the cylindrical rollers 26 placed in rotation preferably have different angular speeds from each other, it being moreover intuitive that the PLC can provide for varying the rotary motion of each cylindrical roller 26 independently according to the processing requirements of the dairy product to be processed by the apparatus 10; in other words, advantageously, the PLC can not only independently vary the direction of rotation of the cylindrical rollers 26, but also independently vary the angular rotational speeds of each cylindrical roller 26.

As indicated in one of the preceding paragraphs relating to the technical field of the invention, the apparatus 10, according to a preferred form of embodiment of the present invention, is subservient to the operations necessary for the production of small torn and/or frayed and/or shredded portions of a dairy product to be further processed in final dairy plant production processes.

Specifically, the apparatus 10 according to the invention, in the preferred embodiment form, described in more detail above, is in practice used to produce mozzarella shreds or stracciatella, which are then blended with fresh cream to make the so-called "stracciatella," or that part of the filling components that is part of the finished dairy product known as "burrata."

In practice, pieces of mozzarella cheese of appropriate size (not shown) are fed to apparatus 10 via hoppers 19.

The pieces of fed mozzarella reaching by gravity the top of the counter-rotating cylindrical rollers 26, are being geared and dragged between the shaped discs 28 and the hollows 29, with the help of the recesses 30 and the teeth 31, are reduced into mozzarella frays or shreds which, in turn and again by gravity reach and settle within the drawer 24 below the cylindrical rollers 26 and housed in the compartment 23.

Advantageously, the teeth 31 and recesses 30 of shaped discs 28, given the staggered position between hollows 29 and shaped discs 28 of adjacent cylindrical rollers 26, in the counter-rotating motion of said cylindrical rollers 26, also facilitate the cleaning and/or removal from hollows 29 of any mozzarella residue, avoiding time consuming cleaning operations and/or long downtime associated with such operations.

In a further manner, sloping walls 16b are attached between the shoulders 25 in correspondence with the cylindrical rollers 26. The walls 16b, in addition to facilitating the conveying of the dairy product to the cylindrical rollers, serve as a support for comb-shaped elements 46, whose teeth 47 are of a suitable size so that the hollows 29, of the pair of cylindrical rollers 26, during the rotational motion of the latter, are able to rotate with the aforementioned teeth 47 inserted therein. Comb elements 46 with teeth 47 ultimately help to further improve the cleaning and removal of any residual dairy product by providing for improved collection and removal of processing residues from hollows 29.

In its operation, the apparatus 10 in order to produce shreds and/or frays of a dairy product, specifically mozzarella, makes use of the independence of the motor 27 and 27a that drive the cylindrical rollers 26. In particular, since said motors are controlled by means of a PLC (not shown in detail) they can have variable speeds and directions of rotation at chosen depending on the requirements of the texture of the mozzarella and/or in any case of any dairy product to be processed.

For the optimization of the processing of mozzarella cheese fed to the apparatus 10, and to determine the optimal size of the "straccetti" (shreds) and/or "sfilacci" (frays) of mozzarella cheese to be obtained, it is also possible, advantageously to act on the adjustment of the relative position of rotation of the cylindrical rollers 26.

This adjustment is achieved by acting on the adjustment knob 37, which, in turn, by rotating the shaft 36 causes the rotation of the cam 35 and the displacement of the shaft 37 inside the slot 34 with consequent sliding of the elements constituting the slide 33 and those carried by it (cylindrical roller 26 and motor 27a) with respect to the guides 33a. The aforementioned adjustment can also take place by means of an electric motor (not shown) that provides for driving the shaft 36 and/or the knob 37 by means of appropriate commands received from a PLC.

It thus appears clear that cylindrical roller 26, connected to and driven by motor 27, has a fixed axis of rotation with respect to shoulders 25, while cylindrical roller 26 adjacent to it, driven and connected to motor 27a, will have an axis of rotation whose horizontal position can be varied as needed: in fact, turning knob 37 rotates cam system 35 and results in the displacement of the cylindrical roller 26 concerned, as well as its motor 27a, in approaching/distancing roller 26 from its adjacent.

Further advantage of the possibility of having an adjustment and/or variation of the relative position between the cylindrical rollers 26 can also be used to optimize the efficiency of cleaning operations and removal of shredded and/or frayed mozzarella residue from both the teeth 31 and the hollows 29 present and made by material removal on the metal cylindrical rollers 26.

The feeding device 18, in the preferred embodiment of the present invention, consists of a pair of hoppers 18 placed on either side of a movable wall or plate 16a. In turn, the plate 16a is equipped at one end with a hinge constraint 17 that allows it to be flipped over for easy access to the inside of the apparatus for cleaning and maintenance. The plate 16a and the hoppers 18, which are attached to it, are in communication by means of appropriate holes with the inner area of the protective casing 16 at and above the pair of counter-rotating cylindrical rollers 26, so that the mozzarella and/or the fed dairy product falls by gravity onto the cylindrical rollers 26 and is captured and geared by them to be frayed and/or shredded and then fall into the collection tray 24 slidably contained in the compartment 23. The tapered shape of the hoppers 26 is dictated by safety reasons to prevent the operator feeding the mozzarella to be processed from accidentally inserting his hands inside the apparatus 10 when the counter-rotating cylindrical rollers 26 are in motion.

### LIST OF NUMERAL REFERENCES and NOMENCLATURE.

10 Apparatus
11 Support frame
12 Lower support base
13 Upper support structure
14 Power supply and control units
15 Machine body
16 Protective casing
16a Movable wall
16b Inclined wall
17 Hinge
18 Dairy product feeding device
19 Hoppers
20 Connection device
22 Adjustable feet
23 Collection compartment
24 Drawer
25 Shoulders
26 Cylindrical rollers
27 Motor
27a Motor
28 Shaped discs
29 Hollows
30 Recesses
31Teeth
32 Joint socket
33 Slide
33a Guide
34 Slot
35 Cam
36 Shaft
37 Knob
38 Load cell
39 Motion transmission shaft
40 Male portion joint
41 Female portion joint
42 Sleeve
43 Clamping element
44 Female joint socket
45 Male joint socket
46 Comb shaped elements
47 Comb teeth

## Claims

1. Apparatus (10) for processing semi-finished dairy products consisting of a support frame (11) suitable for carrying an electrical power supply and control unit (14) and a machine body (15) housed in a protective casing (16), said machine body (15) being in operational connection with said electrical power supply and control unit (14) and said protective casing (16) being provided with movable and/or removable wall portions (16a), in which said machine body (15) includes:
∘ At least one pair of counter-rotating cylindrical rollers (26), adjacent to each other, and pivotally housed within said machine body (115) by means of opposed shoulders (25),
∘ Said counter-rotating rollers (26) of said at least one pair presenting on the mantle surface an alternating succession of shaped discs (28) and hollows (29), spaced apart and parallel to the axis of rotation of said rollers (26),
∘ Said counter-rotating cylindrical rollers (26) being pivotally mounted between said opposed shoulders (25),
∘ At least one hopper-type dairy product feeding system (18) placed on one of said movable and/or removable wall portions (16a) positioned at the top of said protective casing (16),
wherein said shaped discs (28), of said pair of cylindrical rollers (26), each have at least one protruding tooth (31) and at least one respective recess (30) along the circumference of each disc (28),
**characterized in that** at least one pair of independent motors (27, 27a) is provided, each motor (27, 27a) being located in correspondence of one of said opposed shoulders (25) and being operationally connected on one side with said power supply and control unit (14) and on the other side with a respective of said cylindrical rollers (26) by means of mechanical connection suitable for supplying the torque necessary to activate its rotation.

2. Apparatus (10), according to claim 1, **characterized in that** said at least one protruding tooth (31) and said at least one respective recess (30), arranged along the circumference of each disc (28), are a plurality of teeth (31) and respective recesses (30) arranged spaced along the circumference of each disc (28), such that said teeth (31) and recesses (30) are angularly offset from the position of teeth (31) and recesses (30) of a disc (28) preceding and/or following in relation to the axis of rotation of each counter-rotating roller (26).

3. Apparatus (10), according to claims 1-2 **characterized in that** said teeth (31) and recesses (30), spaced along the circumference of each disc (28) of said rollers (26), are made by removal of material from a monolithic metal body of substantially cylindrical shape.

4. Apparatus (10) according to claims 1-3 **characterized in that** said teeth (31) and said recesses (30), spaced along the circumference of each disc (28), are angularly offset from the disc (28) preceding and/or following by an angular distance between 5 and 45 degrees.

5. Apparatus (10) according to claim 1, **characterized in that** said at least one pair of independent motors (27, 27a) is controlled by said power supply and control unit (14) to impart independent and different angular speeds to said counter-rotating rollers (26), mechanically connected to it.

6. Apparatus (10) according to claim 1, **characterized in that** at least one cylindrical roller (26), of said at least one pair of rollers (26), and the independent motor (27, 27a) thereby associated are mounted on a slide (33) equipped with a cam drive system (35) activated by a maneuvering shaft (36) protruding outside the protective casing (16) of the machine body (15) and/or on fixed and/or rolling supports enabling adjustments of the position of said at least one cylindrical roller (26) both in approaching and/or distancing from the other roller (26) of said pair and with respect to its longitudinal axis of rotation, so as to be able to vary and optimize the reciprocal position of said cylindrical rollers (26) of said pair of rollers (26) according to two orthogonal directions.

7. Apparatus (10) according to claim 1, **characterized in that** said at least one dairy product feeding system (18) consists of a pair of hoppers (19) fixed and/or removable provided on a movable upper portion of wall or plate of the protective casing (16), the wall or plate being movable relative to the casing by horizontal hinge constraint.

8. Apparatus (10) according to claim 1, **characterized in that** in said machine body (15), below said at least one pair of counter-rotating cylindrical rollers (26), there is a closed and removable collection compartment (23) of the semi-finished dairy product passing through said rollers (26), said collection compartment (23) being also in operational connection with a data detection sensor in particular weight data sensor.

9. Apparatus (10) according to claim 1, **characterized in that** at least one and/or both motors (27, 27a) of said pair of independent motors (27, 27a) is operatively connected with the respective of said cylindrical rollers (26) by means of a connection and/or mechanical transmission coupling suitable for the rapid release and re-engagement of said cylindrical rollers (26) from the respective motor (27, 27a) during maintenance and/or cleaning operations of said apparatus (10).

10. Apparatus (10) according to claim 1, **characterized in that** said opposed shoulders (25) are provided, on opposite sides of said pair of cylindrical rollers (26), with respective inclined walls (16b) equipped with comb elements (46) with the teeth (47) facing said cylindrical rollers (26).

## Patentansprüche

1. Vorrichtung (10) zur Verarbeitung von halbfertigen Milchprodukten, bestehend aus einem Tragrahmen (11), der zur Aufnahme einer elektrischen Stromversorgungs- und Steuereinheit (14) geeignet ist, und einem Maschinenkörper (15), der in einem Schutzgehäuse (16) untergebracht ist, wobei der Maschinenkörper (15) in einer Wirkverbindung mit der elektrischen Stromversorgungs- und Steuereinheit (14) steht und das Schutzgehäuse (16) mit beweglichen und/oder abnehmbaren Wandabschnitten (16a) versehen ist, wobei der Maschinenkörper (15) umfasst:
- mindestens ein Paar gegenläufig rotierender zylindrischer Walzen (26), die nebeneinander angeordnet sind und mittels gegenüberliegender Schultern (25) drehbar in dem Maschinenkörper (15) aufgenommen sind,
- wobei die gegenläufig rotierenden Walzen (26) des mindestens einen Paares auf ihrer Mantelfläche eine abwechselnde Abfolge von geformten Scheiben (28) und Vertiefungen (29) aufweisen, die beabstandet und parallel zu der Drehachse der Walzen (26) angeordnet sind,
- wobei die gegenläufig rotierenden zylindrischen Walzen (26) zwischen den gegenüberliegenden Schultern (25) drehbar gelagert sind,
- mindestens ein trichterartiges Zuführsystem (18) für Milchprodukte, das auf einem der beweglichen und/oder abnehmbaren Wandabschnitte (16a) angeordnet ist, die sich oben an dem Schutzgehäuse (16) befinden,
wobei die geformten Scheiben (28) des Paares zylindrischer Walzen (26) jeweils mindestens einen vorstehenden Zahn (31) und mindestens eine entsprechende Aussparung (30) entlang des Umfangs jeder Scheibe (28) aufweisen,
**dadurch gekennzeichnet, dass** mindestens ein Paar unabhängiger Motoren (27, 27a) vorgesehen ist, wobei jeder Motor (27, 27a) in Übereinstimmung mit einer der gegenüberliegenden Schultern (25) angeordnet ist und auf der einen Seite mit der Stromversorgungs- und Steuereinheit (14) und auf der anderen Seite mit einer entsprechenden der zylindrischen Walzen (26) mittels einer mechanischen Verbindung verbunden ist, die geeignet ist, das zur Aktivierung ihrer Drehung erforderliche Drehmoment zu liefern.

2. Vorrichtung (10) nach Anspruch 1, **dadurch gekennzeichnet, dass** der mindestens eine vorstehende Zahn (31) und die mindestens eine entsprechende Aussparung (30), die entlang des Umfangs jeder Scheibe (28) angeordnet sind, eine Vielzahl von Zähnen (31) und entsprechenden Aussparungen (30) sind, die entlang des Umfangs jeder Scheibe (28) beabstandet angeordnet sind, so dass die Zähne (31) und Aussparungen (30) gegenüber der Position von Zähne (31) und Aussparungen (30) einer in Bezug auf die Drehachse jeder gegenläufigen Walze (26) vorhergehenden und/oder nachfolgenden Scheibe (28) um einen Winkel versetzt sind.

3. Vorrichtung (10) gemäß den Ansprüchen 1-2, **dadurch gekennzeichnet, dass** die Zähne (31) und Aussparungen (30), die entlang des Umfangs jeder Scheibe (28) der Walzen (26) beabstandet sind, durch Entfernen von Material aus einem monolithischen Metallkörper von im Wesentlichen zylindrischer Form hergestellt sind.

4. Vorrichtung (10) gemäß den Ansprüchen 1-3, **dadurch gekennzeichnet, dass** die Zähne (31) und die Aussparungen (30), die entlang des Umfangs jeder Scheibe (28) beabstandet sind, gegenüber der vorhergehenden und/oder nachfolgenden Scheibe (28) um einen Winkelabstand zwischen 5 und 45 Grad versetzt sind.

5. Vorrichtung (10) nach Anspruch 1, **dadurch gekennzeichnet, dass** das mindestens eine Paar unabhängiger Motoren (27, 27a) von der Stromversorgungs- und Steuereinheit (14) gesteuert ist, um den damit mechanisch verbundenen gegenläufigen Walzen (26) unabhängige und unterschiedliche Winkelgeschwindigkeiten zu verleihen.

6. Vorrichtung (10) nach Anspruch 1, **dadurch gekennzeichnet, dass** mindestens eine zylindrische Walze (26) des mindestens einen Paares von Walzen (26) und der damit verbundene unabhängige Motor (27, 27a) auf einem Schlitten (33), der mit einem Nockenantriebssystem (35) ausgestattet ist, das durch eine Antriebswelle (36) betätigt ist, die aus dem Schutzgehäuse (16) des Maschinenkörpers (15) herausragt, und/oder auf festen und/oder rollenden Stützen montiert sind, die eine Einstellung der Position der mindestens einen zylindrischen Walze (26) sowohl in Richtung auf die andere Walze (26) des Paares zu als auch von dieser weg und in Bezug auf ihre Längsdrehachse einzustellen, um die gegenseitige Position der zylindrischen Walzen (26) des Walzenpaares (26) in zwei orthogonalen Richtungen variieren und optimieren zu können.

7. Vorrichtung (10) nach Anspruch 1, **dadurch gekennzeichnet, dass** das mindestens eine Zuführsystem (18) für Milchprodukte aus einem Paar Trichtern (19) besteht, die fest und/oder abnehmbar an einem beweglichen oberen Abschnitt einer Wand oder Platte des Schutzgehäuses (16) angebracht sind, wobei die Wand oder Platte durch eine horizontale Scharnierverbindung relativ zu dem Gehäuse beweglich ist.

8. Vorrichtung (10) nach Anspruch 1, **dadurch gekennzeichnet, dass** in dem Maschinenkörper (15) unterhalb des mindestens einen Paares gegenläufiger zylindrischer Walzen (26) ein geschlossenes und abnehmbares Auffangfach (23) für das durch die Walzen (26) hindurchtretende halbfertige Milchprodukt vorgesehen ist, wobei das Auffangfach (23) auch in Wirkverbindung mit einem Datenerfassungssensor, insbesondere einem Gewichtsdatensensor, steht.

9. Vorrichtung (10) nach Anspruch 1, **dadurch gekennzeichnet, dass** mindestens einer und/oder beide Motoren (27, 27a) des Paares unabhängiger Motoren (27, 27a) über eine Verbindung und/oder eine mechanische Übertragungskupplung mit einer entsprechenden der zylindrischen Walzen (26) wirkverbunden ist, die für das schnelle Lösen und erneute Wieder-In-Eingriff-Treten der zylindrischen Walzen (26) von/mit dem jeweiligen Motor (27, 27a) während Wartungs- und/oder Reinigungsvorgängen der Vorrichtung (10) geeignet ist.

10. Vorrichtung (10) nach Anspruch 1, **dadurch gekennzeichnet, dass** die gegenüberliegenden Schultern (25) auf den gegenüberliegenden Seiten des Paares zylindrischer Walzen (26) mit entsprechenden geneigten Wänden (16b) vorgesehen sind, die mit Kammelementen (46) ausgestattet sind, deren Zähne (47) den zylindrischen Walzen (26) zugewandt sind.

## Revendications

1. - Appareil (10) pour le traitement de produits laitiers semi-finis consistant en un cadre de support (11) approprié pour porter une unité d'alimentation électrique et de commande (14) et un corps de machine (15) reçu dans un carter de protection (16), ledit corps de machine (15) étant en liaison fonctionnelle avec ladite unité d'alimentation électrique et de commande (14) et ledit carter de protection (16) comportant des parties de paroi mobiles et/ou amovibles (16a), dans lequel ledit corps de machine (15) comprend :
∘ au moins une paire de rouleaux cylindriques contrarotatifs (26), adjacents l'un à l'autre, et reçus de manière pivotante à l'intérieur dudit corps de machine (15) au moyen d'épaulements opposés (25),
∘ lesdits rouleaux contrarotatifs (26) de ladite au moins une paire présentant sur la surface d'enveloppe une succession alternée de disques façonnés (28) et de creux (29), espacés les uns des autres et parallèles à l'axe de rotation desdits rouleaux (26),
∘ lesdits rouleaux cylindriques contrarotatifs (26) étant montés de manière pivotante entre lesdits épaulements opposés (25),
∘ au moins un système d'alimentation en produits laitiers de type trémie (18) placé sur l'une desdites parties de paroi mobiles et/ou amovibles (16a) positionnées à la partie supérieure dudit carter de protection (16),
dans lequel lesdits disques façonnés (28), de ladite paire de rouleaux cylindriques (26), ont chacun au moins une dent saillante (31) et au moins un renfoncement respectif (30) le long de la périphérie de chaque disque (28),
**caractérisé par le fait qu'**au moins une paire de moteurs indépendants (27, 27a) est prévue, chaque moteur (27, 27a) étant situé en correspondance de l'un desdits épaulements opposés (25) et étant relié fonctionnellement d'un côté à ladite unité d'alimentation électrique et de commande (14) et de l'autre côté à l'un respectif desdits rouleaux cylindriques (26) au moyen d'une liaison mécanique apte à fournir le couple nécessaire à l'activation de sa rotation.

2. - Appareil (10) selon la revendication 1, **caractérisé par le fait que** ladite au moins une dent saillante (31) et ledit au moins un renfoncement respectif (30), disposés le long de la périphérie de chaque disque (28), sont une pluralité de dents (31) et de renfoncements respectifs (30) disposés en étant espacés le long de la périphérie de chaque disque (28), de telle sorte que lesdites dents (31) et lesdits renfoncements (30) sont angulairement décalés par rapport à la position des dents (31) et des renfoncements (30) d'un disque (28) précédent et/ou suivant par rapport à l'axe de rotation de chaque rouleau contrarotatif (26).

3. - Appareil (10) selon les revendications 1 à 2, **caractérisé par le fait que** lesdites dents (31) et lesdits renfoncements (30), espacés le long de la périphérie de chaque disque (28) desdits rouleaux (26), sont réalisés par enlèvement de matière à partir d'un corps métallique monobloc de forme sensiblement cylindrique.

4. - Appareil (10) selon les revendications 1 à 3, **caractérisé par le fait que** lesdites dents (31) et lesdits renfoncements (30), espacés le long de la périphérie de chaque disque (28), sont décalés angulairement par rapport au disque (28) précédent et/ou suivant d'une distance angulaire entre 5 et 45 degrés.

5. - Appareil (10) selon la revendication 1, **caractérisé par le fait que** ladite au moins une paire de moteurs indépendants (27, 27a) est commandée par ladite unité d'alimentation électrique et de commande (14) pour conférer des vitesses angulaires indépendantes et différentes auxdits rouleaux contrarotatifs (26), mécaniquement reliés à elle.

6. - Appareil (10) selon la revendication 1, **caractérisé par le fait qu'**au moins un rouleau cylindrique (26), de ladite au moins une paire de rouleaux (26), et le moteur indépendant (27, 27a) ainsi associé, sont montés sur un chariot (33) équipé d'un système d'entraînement à came (35) activé par un arbre de manœuvre (36) faisant saillie à l'extérieur du carter de protection (16) du corps de machine (15) et/ou sur des supports fixes et/ou roulants permettant des ajustements de la position dudit au moins un rouleau cylindrique (26) à la fois en rapprochement et/ou en éloignement vis-à-vis de l'autre rouleau (26) de ladite paire et par rapport à son axe longitudinal de rotation, de façon à pouvoir faire varier et optimiser la position réciproque desdits rouleaux cylindriques (26) de ladite paire de rouleaux (26) selon deux directions orthogonales.

7. - Appareil (10) selon la revendication 1, **caractérisé par le fait que** ledit au moins un système d'alimentation en produits laitiers (18) consiste en une paire de trémies (19) fixes et/ou amovibles disposées sur une partie supérieure mobile de paroi ou plaque du carter de protection (16), la paroi ou plaque étant mobile par rapport au carter par contrainte de charnière horizontale.

8. - Appareil (10) selon la revendication 1, **caractérisé par le fait que**, dans ledit corps de machine (15), au-dessous de ladite au moins une paire de rouleaux cylindriques contrarotatifs (26), il y a un compartiment de collecte fermé et amovible (23) du produit laitier semi-fini passant à travers lesdits rouleaux (26), ledit compartiment de collecte (23) étant également en liaison fonctionnelle avec un capteur de détection de données, en particulier un capteur de données de poids.

9. - Appareil (10) selon la revendication 1, **caractérisé par le fait qu'**au moins un moteur et/ou les deux moteurs (27, 27a) de ladite paire de moteurs indépendants (27, 27a) est/sont relié(s) fonctionnellement au rouleau respectif desdits rouleaux cylindriques (26) au moyen d'une liaison et/ou d'un couplage de transmission mécanique approprié pour les dégagement et réengagement rapides desdits rouleaux cylindriques (26) à partir du moteur respectif (27, 27a) pendant des opérations d'entretien et/ou de nettoyage dudit appareil (10).

10. - Appareil (10) selon la revendication 1, **caractérisé par le fait que** lesdits épaulements opposés (25) comportent, sur des côtés opposés de ladite paire de rouleaux cylindriques (26), des parois inclinées respectives (16b) équipées d'éléments de peigne (46) dont les dents (47) sont tournées vers lesdits rouleaux cylindriques (26).
